# EUROPÄISCHE PATENTSCHRIFT

(11) **EP 3 315 276 B1**
(45) Veröffentlichungstag und Bekanntmachung des Hinweises auf die Patenterteilung: **29.12.2021**
(21) Anmeldenummer: 17196063.6
(22) Anmeldetag: 12.10.2017
(51) Int. Cl.: B29C 31/00, B29C 33/20, B29C 33/30, B29C 44/02, B29C 44/58

(54) **VERFAHREN ZUR HERSTELLUNG VON VERBUNDWERKSTÜCKEN UND FERTIGUNGSANLAGE ZUR ANWENDUNG DER VERFAHREN**
PROCESS FOR THE PRODUCTION OF COMPOSITE PARTS AND A PRODUCTION LINE FOR THE APPLICATION OF THE METHODS
PROCÉDÉ DE FABRICATION DE PIÈCES COMPOSITES ET D'UNE UNITÉ DE FABRICATION POUR L'APPLICATION DES MÉTHODES

(30) Priorität: 01.11.2016 DE 102016120784
(43) Veröffentlichungstag der Anmeldung: 02.05.2018
(73) Patentinhaber: Josef Weischer GmbH & Co. KG, 48282 Emsdetten (DE)
(72) Erfinder: Hune, Rupert, 49090 Osnabrück (DE)
(74) Vertreter: Dr. Binder & Binder GbR

(56) Entgegenhaltungen:
- EP-A1- 1 201 393
- EP-A1- 3 037 237
- WO-A1-2008/104878
- DE-U1-202014 106 196
- JP-A- 2006 088 671
- US-A1- 2003 077 355
- US-A1- 2011 115 117

## Beschreibung

Die Erfindung betrifft zwei Verfahren zur Herstellung von Verbundwerkstücken.

Aus der DE 20 2014 106 196 U1 ist bereits eine Fertigungsanlage und sinngemäß auch ein Verfahren zur Herstellung eines Verbundwerkstückes mittels einer stoffschlüssigen Verbindung zwischen einem Träger, einer Formhaut und einer zwischen Träger und Formhaut angeordneten Schaumstoffschicht bekannt. Der Träger, die Formhaut und die Schaumstoffschicht bilden hierbei das Verbundwerkstück, wobei der Träger und die Formhaut somit Bauelemente des Verbundwerkstückes bilden. Die Fertigungsanlage weist nach der Druckschrift mehrere, im Aufbau gleiche oder gleichartige Fertigungswerkzeuge auf, wobei jedes der Fertigungswerkzeuge aus einem Werkzeugunterteil und einem lösbar und/oder um eine Drehachse schwenkbar mit dem Werkzeugunterteil verbundenen Werkzeugoberteil besteht. Das Werkzeugoberteil ist dabei jeweils zur Aufnahme des Trägers und das Werkzeugunterteil zur Einbringung der Formhaut geeignet, wobei auf die Formhaut ein ursprünglich flüssiges Reaktionsgemisch, also beispielsweise Polyol und Isocyanat, aufgebracht wird, das anschließend zu einer PolyurethanSchaumstoffschicht aushärtet. Dadurch werden der Träger, die Formhaut und die Schaumstoffschicht nach dem Schließen des Fertigungswerkzeugs miteinander verbunden. Verbundwerkstücke der hier betroffenen Art können beispielsweise als Armaturenbrett eines Kraftfahrzeuges zum Einsatz kommen. Darüber hinaus wird in der DE 20 2014 106 196 U1 beschrieben, dass wenigstens ein, vorzugsweise jedoch zwei, durch ein Programm gesteuerte Roboter zum Einsatz kommen. Wenigstens einer der Roboter verfügt dabei über mindestens einen Roboterarm zur Bewegung des gesamten, aus Werkzeugunterteil und Werkzeugoberteil bestehenden Fertigungswerkzeugs in unterschiedlichen Bewegungsrichtungen und stellt somit einen Werkzeugroboter dar. Das Werkzeugoberteil und das Werkzeugunterteil können mittels des Werkzeugroboters in jeder Bewegungsrichtung voneinander getrennt oder miteinander verbunden werden. Da bei jedem der zum Einsatz kommenden Fertigungswerkzeuge das Werkzeugunterteil und das Werkzeugoberteil lösbar miteinander verbunden sind, kann dadurch erreicht werden, dass keine Stillstandszeiten entstehen. Die Werkzeugunterteile beziehungsweise Werkzeugoberteile können auf diese Weise nämlich unabhängig voneinander bestückt werden. Der zweite Roboter dient lediglich der Aufbringung der Schaumstoffschicht auf die Formhaut und bildet somit einen Schäumroboter. Während der zur Aushärtung der Schaumstoffschicht erforderlichen Wartezeit wird gemäß dem Offenbarungsgehalt der Druckschrift das geschlossene Fertigungswerkzeug vom Werkzeugroboter in eine Parkposition verbracht, wobei hierfür innerhalb eines Werkzeugmagazins der Fertigungsanlage mehrere Parkpositionen vorhanden sind. Auf diese Weise können die geschlossenen Fertigungswerkzeuge in das Werkzeugmagazin überführt werden, um dort in der Parkposition zu verbleiben, bis die Schaumstoffschicht vollständig ausgehärtet und damit das Verbundwerkstück fertig gestellt ist. Das auf diese Weise erzeugte Verbundwerkstück wird anschließend aus dem Fertigungswerkzeug entnommen.
Dabei ist es wichtig, zu erkennen, dass gemäß dem Offenbarungsgehalt der DE 20 2014 106 196 U1 ein lediglich aus dem Werkzeugoberteil und dem Werkzeugunterteil bestehendes Fertigungswerkzeug zum Einsatz kommt, das in der Regel aus einem Aluminiumswerkstoff hergestellt ist und somit aufgrund seiner verhältnismäßig geringen Baugröße problemlos durch den Werkzeugroboter betätigt, insbesondere geöffnet und geschlossen werden kann.

Die DE 20 2014 106 196 U1 offenbart zudem auch den Einsatz eines Dreh- oder Rundtisches, der über zwei oder drei Stationen verfügt.

Als nachteilig hat sich bei den bislang bekannten Fertigungsanlagen herausgestellt, dass die von Bedienpersonen durchzuführenden Arbeiten wenig ergonomisch und zum Teil sehr schwierig sind. Dies ist beispielsweise dem Umstand geschuldet, dass das Werkzeugunterteil mit dem Werkzeugoberteil über eine Achse schwenkbar verbunden ist. Die daraus resultierende Baugröße eines derartigen Fertigungswerkzeuges führt dazu, dass in einem solchen Fall insbesondere die Bestückung des Werkzeugoberteils für eine einzelne Bedienperson nur mit erheblichem Aufwand möglich ist. Um diese schwierigen Tätigkeiten zu erleichtern, werden bei den bisher bekannten Fertigungswerkzeugen spezielle Vakuum-Ansaugeinrichtungen verwendet, die die in die Kavität eingesetzten Bauteile in dem Werkzeugoberteil und/oder in dem Werkzeugunterteil fixieren. Der hierfür erforderliche Aufwand erhöht die Kosten eines derartigen Fertigungswerkzeugs und damit insgesamt die Fertigungskosten.

Aus der EP 1 201 393 A1 ist eine Vorrichtung zur Herstellung von Verbundwerkstücken, also eine Fertigungsanlage bekannt, die ein Gestell umfasst, in dem in einer ersten Arbeitsebene ein erster Werkzeugträger ein Formunterteil aufnimmt, wobei ferner zwei alternierend damit verbindbare Formoberteile vorhanden sind, die mittels einer Hubeinrichtung vertikal bewegbar sind. In einem Magazin, das sich in einer zweiten Arbeitsebene, oberhalb der ersten Arbeitsebene befindet, sind diese, jeweils in einem Werkzeugträger aufgenommenen Formoberteile angeordnet, die innerhalb der zweiten Arbeitsebene gegeneinander austauschbar sind. Anders ausgedrückt wird bei dieser Lösung der Werkzeugträger mit dem jeweiligen Formoberteil vertikal bewegt, sodass dadurch das Werkzeug geöffnet oder geschlossen werden kann. Die gesamte, in dieser Druckschrift offenbarte Fertigungsanlage weist eine erhebliche Baugröße auf und ermöglicht zudem nur eine Fertigung der herzustellenden Verbundwerkstücke in einer festgelegten Reihenfolge, also ausschließlich sequenziell.

Eine andere Ausführungsvariante einer Fertigungsanlage geht aus der EP 3 037 237 A1 hervor. Hier wird insbesondere im Zusammenhang mit den Darstellungen der Figuren 13 und 14 und der zugehörigen Beschreibung eine Fertigungsanlage offenbart, die ein Gestell aufweist, in dem ein Werkzeugunterteil angeordnet ist. Das Werkzeugunterteil kann dabei mit einem Werkzeugoberteil verschlossen werden, das hierfür vertikal bewegbar und um eine Achse schwenkbar in dem Gestell aufgenommen ist. Bei geöffnetem Werkzeug kann ein Schäumroboter einen aufschäumbaren Werkstoff in die offene Kavität des Werkzeugs einbringen. Auch bei dieser Lösung ist der Nachteil gegeben, dass die durch eine Bedienperson erforderliche Bestückung der Kavität mit Zusatzelementen nur mit erheblichem Aufwand und körperlichem Einsatz möglich ist.

Als weiteren Stand der Technik wird auf die Druckschrift US 2003 / 00 773 55 A1 verwiesen.

Der Erfindung liegt die Aufgabe zugrunde, mindestens ein Verfahren bereitzustellen, das eine vereinfachte, weitgehend automatisierte Herstellung eines Verbundwerkstückes ermöglicht und bei dem die zum Einsatz kommende Fertigungsanlage vereinfacht ausgeführt und ergonomisch zu bedienen ist.

Die Erfindung löst diese Aufgabenstellung mit den Merkmalen der unabhängigen Patentansprüche 1 und 2.
Weitere Ausgestaltungen der Erfindung sind Gegenstand der Unteransprüche.

Ein Verfahren zur Herstellung von Verbundwerkstücken mit mindestens einer Schaumstoffschicht in einer Fertigungsanlage, die ihrerseits umfasst:
- einen aus einem Werkzeugträgeroberteil und einem Werkzeugträgerunterteil gebildeten Werkzeugträger, in dem ein Werkzeugoberteil und ein lösbar mit diesem verbundenes Werkzeugunterteil aufgenommen sind, die zusammen ein Fertigungswerkzeug bilden,
- einen Werkzeugroboter,
- einen Schäumroboter zum Eintrag eines zum Aufschäumen geeigneten Reaktionsgemischs,
- eine Computersteuerung,
ist erfindungsgemäß durch folgende Verfahrensschritte gekennzeichnet:
- der Werkzeugroboter entnimmt das Werkzeugträgeroberteil zusammen mit dem Werkzeugoberteil aus dem Werkzeugträger und setzt das Werkzeugträgeroberteil neben dem im Werkzeugträgerunterteil aufgenommenen Werkzeugunterteil ab,
- wenigstens eine Kavität des Werkzeugoberteils und/oder des Werkzeugunterteils wird mit mindestens einem Bauelement des Verbundwerkstückes ausgestattet,
- der Schäumroboter bringt das Reaktionsgemisch mittels eines Mischkopfes in das geöffnete Werkzeugunterteil ein,
- der Werkzeugroboter nimmt das Werkzeugträgeroberteil mit dem darin enthaltenen Werkzeugoberteil auf und fügt es wieder mit dem Werkzeugträgerunterteil und dem darin aufgenommenen Werkzeugunterteil zusammen, sodass das Fertigungswerkzeug während des Schäumvorganges geschlossen ist.

Überschreitet ein Fertigungswerkzeug eine bestimmte Größe, so wird es erforderlich, dieses aus Stabilitätsgründen in einen Werkzeugträger einzusetzen. Im vorliegenden Fall wurde dieser Werkzeugträger zweiteilig ausgeführt, so dass er aus einem Werkzeugträgerunterteil und einem Werkzeugträgeroberteil besteht. In das Werkzeugträgerunterteil ist dabei das zur Herstellung des Verbundwerkstückes erforderliche Werkzeugunterteil und in das Werkzeugträgeroberteil das passende Gegenstück, nämlich das Werkzeugoberteil, eingesetzt. Die Besonderheit besteht bei der Erfindung darin, dass der Werkzeugroboter das Werkzeugträgeroberteil zusammen mit dem darin aufgenommenen Werkzeugoberteil von dem Werkzeugträgerunterteil und dem darin aufgenommenen Werkzeugunterteil trennt und nach der erfolgten Bestückung mit Bauelementen wieder zusammengefügt. Diese Maßnahmen führen zu einem hohen Automatisierungsgrad und einer extrem kurzen Taktzeit. Mit dem erfindungsgemäßen Verfahren wird die Bestückung des Werkzeugoberteils und/oder des Werkzeugunterteils mit nur einer Bedienperson oder sogar mit einem hierfür geeigneten Roboter möglich, wobei für die Bedienperson eine ergonomisch günstige Anordnung dadurch geschaffen wird, dass das in dem Werkzeugträgeroberteil aufgenommene Werkzeugoberteil von dem Werkzeugroboter seitlich neben dem im Werkzeugträgerunterteil eingesetzten Werkzeugunterteil angeordnet wird und damit für den Bestückungsroboter oder die Bedienperson in vereinfachter Weise zugänglich ist. Ein zum Einsatz kommender Bestückungsroboter kann dementsprechend kleiner dimensioniert werden, was zu einer Vereinfachung und damit zu Kosteneinsparungen führt. Auf diese Weise kann ferner eine sehr weitgehende Automatisierung erreicht werden. Durch die Übertragung zahlreicher Funktionen auf den Werkzeugroboter wird es sogar möglich, den Werkzeugträger insgesamt wesentlich zu vereinfachen. Die Fertigungsanlage wird damit kostengünstiger und der Fertigungsaufwand zur Herstellung eines Verbundwerkstückes kann beschleunigt und damit reduziert werden.

Alternativ zu dem zuvor beschriebenen Verfahren können die Verfahrensschritte auch wie folgt durchgeführt werden:
- der Werkzeugroboter entnimmt das Werkzeugträgeroberteil zusammen mit dem Werkzeugoberteil aus dem Werkzeugträger und setzt das Werkzeugträgeroberteil neben dem im Werkzeugträgerunterteil aufgenommenen Werkzeugunterteil ab,
- wenigstens eine Kavität des Werkzeugoberteils und/oder des Werkzeugunterteils wird mit mindestens einem Bauelement des Verbundwerkstückes ausgestattet,
- der Werkzeugroboter nimmt das Werkzeugträgeroberteil mit dem darin enthaltenen Werkzeugoberteil auf und fügt es wieder mit dem Werkzeugträgerunterteil und dem darin aufgenommenen Werkzeugunterteil zusammen, sodass das Fertigungswerkzeug geschlossen ist,
- der Schäumroboter bringt durch eine Angussöffnung in dem Fertigungswerkzeug mittels eines Mischkopfes das zum Aufschäumen geeignete Reaktionsgemisch in die Kavität des geschlossenen Fertigungswerkzeugs ein.

Der Unterschied zwischen den beiden erfindungsgemäßen Verfahren besteht folglich darin, dass im ersten Fall das Reaktionsgemisch in das geöffnete Werkzeugunterteil und im zweiten Fall durch eine Angussöffnung in die Kavität des geschlossenen Fertigungswerkzeugs eingebracht wird.

Bei den zum Einsatz kommenden Werkzeugrobotern handelt es sich um Industrieroboter. Für die Handhabung des Werkzeugträgeroberteils ist im vorliegenden Fall eine gewisse Komplexität der Bewegungsmöglichkeiten notwendig. Ebenso muss ein recht hohes Gewicht bewältigt werden. In diesem Zusammenhang hat sich herausgestellt, dass insbesondere Knickarmroboter über die hierfür erforderlichen Eigenschaften verfügen. Bei Verwendung eines 6-Achs-Roboters können zudem nahezu alle erdenklichen Positionen angefahren werden, die für die Ausführung der erfindungsgemäßen Verfahren erforderlich sind. Ferner kann man die Werkzeugteile so positionieren, wie es für einen Bearbeitungsschritt notwendig ist.

Eine erste Ausgestaltung der Verfahren ist darin zu sehen, dass der Werkzeugroboter das geschlossene Fertigungswerkzeug komplett aus dem Werkzeugträger entnimmt und es an eine Werkzeugtransporteinrichtung übergibt, mittels der das Fertigungswerkzeug zu einem Werkzeugmagazin transportiert und dort für die Schaumreaktion und das Aushärten des Schaums abgelegt wird.

Alternativ hierzu kann der Werkzeugroboter jedoch auch den gesamten Werkzeugträger mit dem geschlossenen Fertigungswerkzeug aufnehmen und ihn an eine Werkzeugtransporteinrichtung übergeben, mittels der der Werkzeugträger zu einem Werkzeugmagazin transportiert und dort während des Schäumvorganges abgelegt wird.

Anders ausgedrückt wird durch die Erfindung eine Trennung zwischen dem Produktionsbereich und einem Werkzeugmagazin bewirkt, die über einen Werkzeugroboter mit hoher Traglast und großem Greifraum miteinander gekoppelt werden. Erst, wenn der Greifraum des Werkzeugroboters nicht mehr ausreichend ist, den Transport des Fertigungswerkzeuges oder des Werkzeugträgers zum Werkzeugmagazin durchzuführen, wird eine zusätzliche Transporteinrichtung verwendet, bei der es sich beispielsweise um ein Shuttle handeln kann. Das Anlagenkonzept mit integriertem Werkzeugmagazin ermöglicht eine an dem Bedarf angepasste Produktion (just-in-sequence), weil das Werkzeugmagazin einen Zwischenpuffer für Fertigungswerkzeuge ermöglicht, die nicht kontinuierlich benötigt werden. Darüber hinaus bietet das Werkzeugmagazin die Möglichkeit, die Fertigungswerkzeuge so lange abzulegen, bis der Schaumstoff ausreagiert ist. Während dieser Zeit kann die Fertigung weiterer Verbundwerkstücke erfolgen, so dass dadurch eine kontinuierliche Produktion, ohne Unterbrechungen möglich ist.

Die Verarbeitung von Kunststoffen führt zu besonderen Rahmenbedingungen, so dass beispielsweise die Oberfläche eines Fertigungswerkzeugs vor der Einbringung der miteinander zu verbindenden Bauelemente beziehungsweise des Reaktionsgemisches vorbehandelt werden muss. Ein geeignetes Verfahren stellt die Beflämmung des Fertigungswerkzeugs mit einer Gasflamme dar. Dabei wird die Oberfläche zwecks Haftvermittlung aktiviert.

Es besteht eine andere weiterbildende Maßnahme der Erfindung darin, dass in mindestens einem Teil des Werkzeugmagazins ein Bedienroboter zur Beflämmung der Kavität des geöffneten Fertigungswerkzeugs, also des leeren Werkzeugunterteils und/oder des leeren Werkzeugoberteils verwendet wird, um diesen Arbeitsschritt ebenfalls zu automatisieren.

Eine besonders vorteilhafte und weiterbildende Maßnahme ist darüber hinaus darin zu sehen, dass das Werkzeugoberteil schwenkbar in dem Werkzeugträgeroberteil und/oder das Werkzeugunterteil schwenkbar in dem Werkzeugträgerunterteil aufgenommen ist, um eine für die Bestückung optimale Position des Werkzeugoberteils und/oder des Werkzeugunterteils einstellen zu können.
Dadurch wird insbesondere eine ergonomisch günstige Anordnung der genannten Werkzeugteile erreicht, so dass die Bedienperson nicht nur gleichzeitig mehrere Werkzeuge bestücken kann, sondern auch körperlich anstrengende Tätigkeiten vermieden werden. So ist es beispielsweise möglich, das Werkzeugoberteil in eine Neigung von annähernd 90° und/oder das Werkzeugunterteil in eine Neigung von zum Beispiel 45° zur Horizontalen zu versetzen.

Eine vorteilhafte Fertigungsanlage zur Anwendung der Verfahren weist einen aus einem Werkzeugträgeroberteil und einem Werkzeugträgerunterteil gebildeten Werkzeugträger, in dem ein Werkzeugoberteil und ein lösbar mit diesem verbundenes Werkzeugunterteil aufgenommen sind, die zusammen ein Fertigungswerkzeug bilden, einen Werkzeugroboter, einen Schäumroboter zum Eintrag eines zum Aufschäumen geeigneten Reaktionsgemischs in das geöffnete Werkzeugunterteil oder in das geschlossene Fertigungswerkzeug und eine Computersteuerung auf und ist dadurch gekennzeichnet, dass das Werkzeugoberteil schwenkbar in dem Werkzeugträgeroberteil und/oder das Werkzeugunterteil schwenkbar in dem Werkzeugträgerunterteil aufgenommen ist beziehungsweise sind, sodass wahlweise eine für die Bestückung optimale Position des Werkzeugoberteils und/oder des Werkzeugunterteils einstellbar ist.

Dabei hat es sich als besonders vorteilhaft erwiesen, wenn das Werkzeugoberteil und/oder das Werkzeugunterteil stufenlos schwenkbar ausgeführt ist und folglich in beliebigen Lagen oder Positionen fixiert werden kann. Diese Lösung entspricht einer speziellen Ausgestaltung der Erfindung und ermöglicht die Anpassung der Lage des Werkzeugoberteils beziehungsweise des Werkzeugunterteils entsprechend der Körpergröße der an diesen Werkzeugen tätigen Bedienpersonen. Von Bedeutung ist hierbei ferner, dass das Werkzeugunterteil unabhängig vom Werkzeugoberteil oder gemeinsam mit dem Werkzeugoberteil verschwenkt werden kann, sodass dadurch ein hohes Maß an flexibler Handhabung und ergonomisch günstiger Einstellmöglichkeiten gegeben ist.

Insgesamt ist es auch von Vorteil, dass die Fertigungsanlage modular aufgebaut ist und somit problemlos um weitere Komponenten oder Fertigungszellen ergänzt oder um Komponenten reduziert werden kann.

Zur Verbesserung des Produktionsablaufes zur Herstellung eines Verbundwerkstückes ist es auch von Vorteil, wenn die Fertigungsanlage einen Drehtisch mit mehreren Bearbeitungspositionen aufweist, wobei wenigstens eine Bearbeitungsposition für die Bestückung mit Bauteilen, eine Bearbeitungsposition für die Einbringung des Reaktionsgemisches und eine Bearbeitungsposition für die Entnahme des Verbundwerkstückes und/oder Reinigung vorhanden ist. Somit wird nach Abschluss eines Arbeitsschrittes der Drehtisch um 120° gedreht, so dass der nächstfolgende Arbeitsschritt durchgeführt werden kann, wobei bei den beschriebenen drei Bearbeitungspositionen gleichzeitig drei Arbeitsschritte ausführbar sind. Die mit einem Drehtisch ausgestattete Fertigungsanlage ermöglicht folglich eine systematische Arbeitsteilung der Bedienpersonen und vereinfacht die Logistik bezüglich der Zuführung von Halbzeugen und Abführung von geschäumten Verbundwerkstücken. Ein weiterer Vorteil des zum Einsatz kommenden Drehtisches ist darin zu sehen, dass ein abgesicherter Bereich geschaffen werden kann, in dem der Werkzeugroboter und/oder der Schäumroboter agiert. Insgesamt ist festzustellen, dass mit Hilfe eines Drehtisches die Automatisierung der gesamten Fertigungsanlage verbessert werden kann.

Die Herstellung eines Verbundwerkstückes mit einer Schaumstoffschicht erfordert die Einhaltung definierter Randbedingungen, zu denen insbesondere auch eine definierte Reaktionstemperatur gehört. Um optimale Bedingungen für die Aushärtung des Schaumstoffes zu schaffen, wird gemäß einer Weiterbildung der Erfindung vorgeschlagen, dass das Werkzeugmagazin zur Konditionierung Temperierungseinrichtungen für die Fertigungswerkzeuge aufweist. Durch die Temperierungseinrichtungen können die Fertigungswerkzeuge beispielsweise vor der Einbringung des zum Aufschäumen geeigneten Werkstoffes in die Kavität erwärmt oder während der Aushärtung auf einem bestimmten Temperaturniveau gehalten werden. Diese Lösung beinhaltet folglich auch die Möglichkeit einer Kühlung, sofern dies notwendig sein sollte. Durch die damit einhergehende Verbesserung der Reaktionsbedingungen des Schaumstoffes wird eine bessere und gleichmäßigere Qualität der Verbundwerkstücke erreicht.

Eine besonders vorteilhafte Lösung ist ferner darin zu sehen, dass das Werkzeugmagazin und das Fertigungswerkzeug zueinander passende Energieschnittstellen aufweisen, sodass beim Absetzen des Fertigungswerkzeuges in dem Werkzeugmagazin beispielsweise unmittelbar eine die Temperierungseinrichtungen aktivierende Verbindung geschaffen wird. Anders ausgedrückt sind keine zusätzlichen Arbeitsschritte erforderlich. Durch das Einsetzen des Fertigungswerkzeuges in das Werkzeugmagazin wird die Temperierungseinrichtung aktiviert und erwärmt oder kühlt somit das Fertigungswerkzeug in der zuvor beschriebenen Weise.

Zwar ist es erforderlich, das Fertigungswerkzeug zur Einbringung von Bauteilen zu öffnen. Die Einbringung des zum Aufschäumen geeigneten Reaktionsgemisches kann jedoch gemäß einem weiterführenden Vorschlag der Erfindung bei geöffnetem oder bei geschlossenem Fertigungswerkzeug durchgeführt werden. Auf die Einbringung des Reaktionsgemisches in das geöffnete Fertigungswerkzeug wurde zuvor bereits eingegangen. Sollte das zum Aufschäumen geeignete Reaktionsgemisch hingegen in das geschlossene Fertigungswerkzeug eingebracht werden, sind hierfür geeignete Anguss- oder Einspritzöffnungen beziehungsweise Spritzkanäle vorzusehen.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: eine erste Ausführungsvariante einer Fertigungsanlage,
- Figur 2:: eine Ausführungsvariante einer modular erweiterten Fertigungsanlage,
- Figur 3:: eine verglichen mit der Darstellung in Figur 2 modular nochmals erweiterte Ausführungsvariante einer Fertigungsanlage,
- Figur 4:: eine Fertigungsanlage mit zwei Rundtischen in einer erweiterten Ausführung,
- Figur 5:: das vom Werkzeugunterteil getrennte Werkzeugoberteil in einer Bestückungsposition,
- Figur 6:: ein in einem Werkzeugträgerunterteil aufgenommenes Werkzeugunterteil in einer verschwenkten Position
und
- Figur 7:: ein in einem Werkzeugträgeroberteil aufgenommenes Werkzeugoberteil in einer verschwenkten Position.

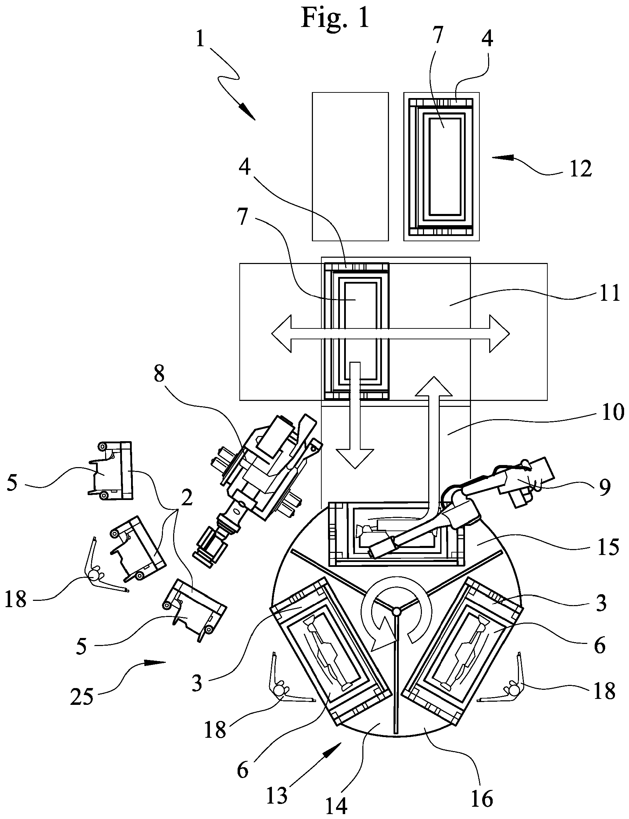

In der Figur 1 ist eine komplette Fertigungsanlage 1 zur Herstellung eines hier nicht gezeigten Verbundwerkstückes dargestellt, bei dem es sich vorliegend um eine Instrumententafel für ein Kraftfahrzeug handelt. Die Fertigungsanlage 1 besteht hierbei aus einem Werkzeugmagazin 12 und einem Produktionsbereich 25. Zwischen dem Werkzeugmagazin 12 und dem Produktionsbereich 25 ist eine Werkzeugtransporteinrichtung 10, 11 vorhanden, die sich in diesem Fall aus einer als Rollenband ausgeführten Werkzeugtransporteinrichtung 10 und einer als Shuttle ausgeführten Werkzeugtransporteinrichtung 11 zusammensetzt. Mit den Werkzeugtransporteinrichtungen 10, 11 können die Fertigungswerkzeuge 7 und/oder die Werkzeugträger 4 in verschiedenen Richtungen transportiert werden. Bei dem dargestellten Beispiel verlaufen die Richtungen rechtwinklig zueinander. Das Werkzeugmagazin 12 ist hier sehr klein gehalten und weist lediglich zwei Plätze zur Ablage eines Fertigungswerkzeuges 7 auf. Wie aus der Darstellung in Figur 1 ferner ersichtlich wird, ist hierbei ein Fertigungswerkzeug 7 in dem Werkzeugmagazin 12 abgelegt, während das zweite Fertigungswerkzeug 7 sich im Bereich des Shuttles 11 befindet. Von dem Werkzeugmagazin 12 aus wird das Fertigungswerkzeug 7 zunächst mittels einer Teleskopgabel auf das Shuttle 11 gezogen. Anschließend befördert das Shuttle 11 das Fertigungswerkzeug 7 zu dem Rollenband 10, wo die Teleskopgabel das Fertigungswerkzeug 7 in eine für den Werkzeugroboter 8 erreichbare Position bringt. Nach der Entkopplung des Fertigungswerkzeuges 7 übernimmt der Werkzeugroboter 8 das Fertigungswerkzeug 7 und verbringt dieses auf den Drehtisch 13. Dort angekommen entriegelt der Werkzeugroboter 8 das in einem Werkzeugträgeroberteil 2 aufgenommene Werkzeugoberteil 5 von dem in einem Werkzeugträgerunterteil 3 aufgenommenen Werkzeugunterteil 6, sodass das Fertigungswerkzeug 7 geöffnet ist und die Werkzeugteile 5 und 6 voneinander getrennt werden können. Werkzeugträgeroberteil 2 und Werkzeugträgerunterteil 3 bilden zusammen den Werkzeugträger 4. Anschließend wird das in einem Werkzeugträgeroberteil 2 aufgenommene Werkzeugoberteil 5 vom Werkzeugroboter 8 neben dem im Werkzeugträgerunterteil 3 angeordneten Werkzeugunterteil 6 positioniert, so dass das Werkzeugoberteil 5 und/oder das Werkzeugunterteil 6 mit Bauteilen bestückt werden können, die später Bestandteile des herzustellenden Verbundwerkstückes sind.
Während dieser Zeit rotiert der Drehtisch 13 jeweils um 120°, was vorliegend entgegen dem Uhrzeigersinn erfolgt. Der Drehtisch 13 weist dabei insgesamt drei Bearbeitungspositionen 14, 15, 16 auf, wobei eine erste Bearbeitungsposition 14 der Bestückung des Werkzeugunterteils 6 mit einem Bauteil des herzustellenden Verbundwerkstückes, also im vorliegenden Fall mit einer Formhaut, dient. Die Formhaut wird hier durch eine Bedienperson 18 eingelegt.
In einer weiteren, zu der zuvor beschriebenen Bearbeitungsposition 14 um 120° versetzten Bearbeitungsposition 15, wird durch einen Schäumroboter 9 ein aufschäumendes Reaktionsgemisch in die Kavität des mit der Formhaut bestückten Werkzeugunterteils 6 eingebracht.
In einer weiteren Bearbeitungsposition 16, die um weitere 120° versetzt zu der Bearbeitungsposition 15 ist, erfolgt die Reinigung des in dem Werkzeugträgerunterteil 3 aufgenommenen Werkzeugunterteils 6. Diese Bearbeitungsposition 16 dient auch der Entnahme des fertig gestellten Verbundwerkstückes nach Beendigung der Herstellung. Die Entnahme des Verbundwerkstückes kann manuell oder durch den Werkzeugroboter 8 erfolgen. Sind sämtliche Arbeitsschritte vollzogen, so rotiert der Drehtisch um weitere 120° zurück in die Anfangsstellung.
Zur Reaktion und zum Aushärten des Schaumstoffes wird das gesamte Fertigungswerkzeug 7 mit Hilfe des Werkzeugroboters 8 auf die Werkzeugtransporteinrichtung 10, 11 und mittels dieser in das Werkzeugmagazin 12 transportiert. Damit während des gesamten Herstellungsverfahrens in dem Fertigungswerkzeug 7 ein Vakuum und eine optimale Temperierung aufrechterhalten bleiben, besitzt jede Anlagenkomponente, die das Fertigungswerkzeug 7 transportiert oder aufnimmt, mindestens eine Energieschnittstelle.

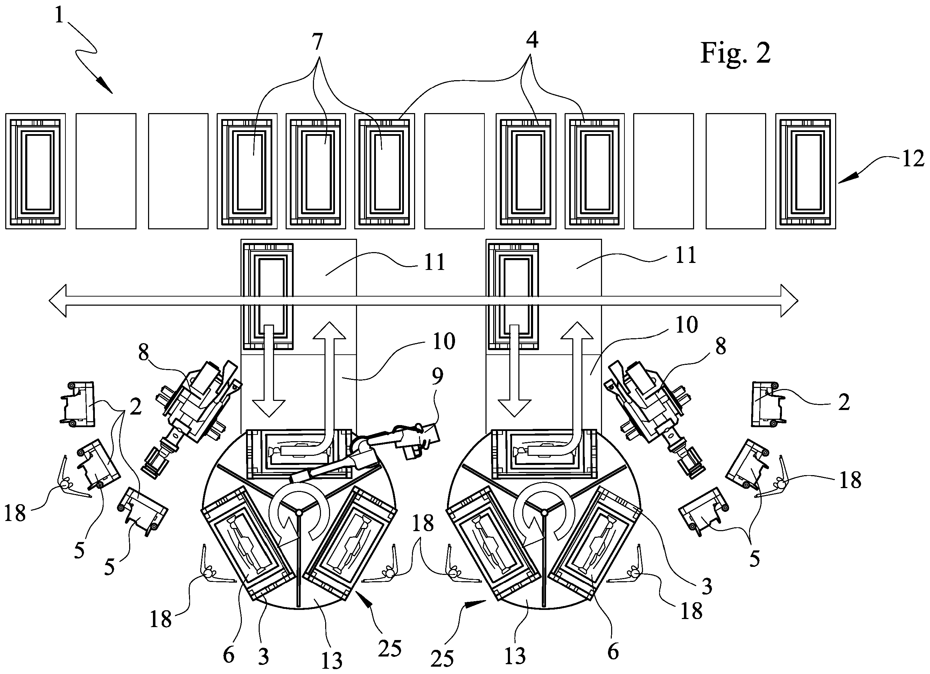

Die gesamte Fertigungsanlage 1 ist modular aufgebaut und kann damit beliebig erweitert werden. Eine derartig erweiterte Lösung zeigt beispielsweise die Darstellung in Figur 2. Hierbei ist ein im Vergleich zur Ausführungsvariante in Figur 1 wesentlich vergrößertes Werkzeugmagazin 12 vorhanden, dass mehrere Plätze zur Ablage je eines Fertigungswerkzeuges 7 und/ oder eines Werkzeugträgers 4 aufweist. Auch die als Shuttle ausgeführte Werkzeugtransporteinrichtung 11 ist hierbei wesentlich komplexer, als bei dem zuvor beschriebenen Beispiel. Die Fertigungsanlage 1 in Figur 2 weist insgesamt zwei, nebeneinander angeordnete Drehtische 13 auf, die jeweils über eine Werkzeugtransporteinrichtung 10 und eine Werkzeugtransporteinrichtung 11 mit dem Werkzeugmagazin 12 in Verbindung stehen. Der Aufbau der Drehtische 13 entspricht der im Zusammenhang mit der Beschreibung der Figur 1 bereits ausgeführten Variante, so dass diese ebenfalls drei Bearbeitungspositionen 14, 15, 16 aufweisen, die jeweils 120° zueinander versetzt angeordnet sind.
Die Besonderheit der in Figur 2 gezeigten Fertigungsanlage 1 besteht darin, dass nur ein einziger Schäumroboter 9 erforderlich ist, um beide Drehtische 13 zu versorgen. Jeder Drehtisch 13 definiert dabei einen Produktionsbereich 25 zur Herstellung von Verbundwerkstücken und weist zudem je einen Werkzeugroboter 8 auf. Die Herstellung der Verbundwerkstücke kann dadurch mit minimalem Personalaufwand erfolgen und ist weitgehend automatisiert, wobei sowohl die Werkzeugunterteile 6 in ihren Werkzeugträgerunterteilen 3, als auch die Werkzeugoberteile 5 in ihren Werkzeugträgeroberteilen 2, oder, für eine optimale Schäumlage auch der gesamte Werkzeugträger 4, um eine Achse verschwenkbar sind, so dass die an den Werkzugteilen 5, 6 tätigen Bedienpersonen 18 eine ergonomisch optimale Körperhaltung einnehmen können. Zudem werden die Werkzeugoberteile 5 unmittelbar neben den Werkzeugunterteilen 6 aufgestellt, so dass eine gleichzeitige Bestückung durch die Bedienperson 18 möglich ist.

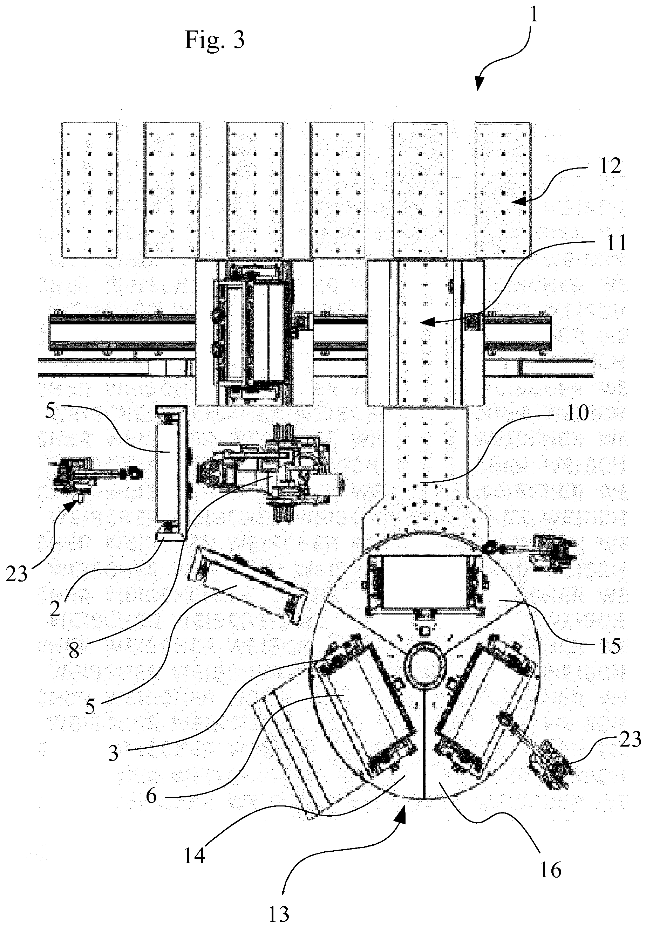

In der Figur 3 ist eine, verglichen mit der Darstellung in Figur 2, modular nochmals erweiterte Ausführungsvariante einer Fertigungsanlage 1 dargestellt, mit der eine vollautomatische Herstellung von Verbundwerkstücken erreicht werden kann. In der Figur 3 sind aus diesem Grund keine Bedienpersonen 18 gezeigt. Diese wurden durch Bedienroboter 23 ersetzt, wobei durch diese Bedienroboter 23 sogar zusätzliche Funktionen realisiert werden können. So ist beispielsweise im linken Bildteil der Figur 3 ein Bedienroboter 23 erkennbar, der in diesem Fall ein in einem Werkzeugträgeroberteil 2 aufgenommenes Werkzeugoberteil 5 beflämmt und damit für die weitere Bearbeitung vorbereitet. Die einzelnen Bearbeitungspositionen 14, 15 und 16 des vorhandenen Drehtisches 13 sind analog zu den im Zusammenhang mit den Figuren 1 und 2 beschriebenen dargestellt. So befindet sich die Bearbeitungsposition 15 zur Einbringung von Schaumwerkstoff im Bereich der Werkzeugtransporteinrichtung 10. Um 120° im Uhrzeigersinn versetzt hierzu weist der Drehtisch 13 die Bearbeitungsposition 16 zur Reinigung des Werkzeugunterteils 6 beziehungsweise zur Entnahme des Verbundwerkstückes und um weitere 120° im Uhrzeigersinn versetzt die Bearbeitungsposition 14, in der die Bestückung mit Bauelementen erfolgt, auf.

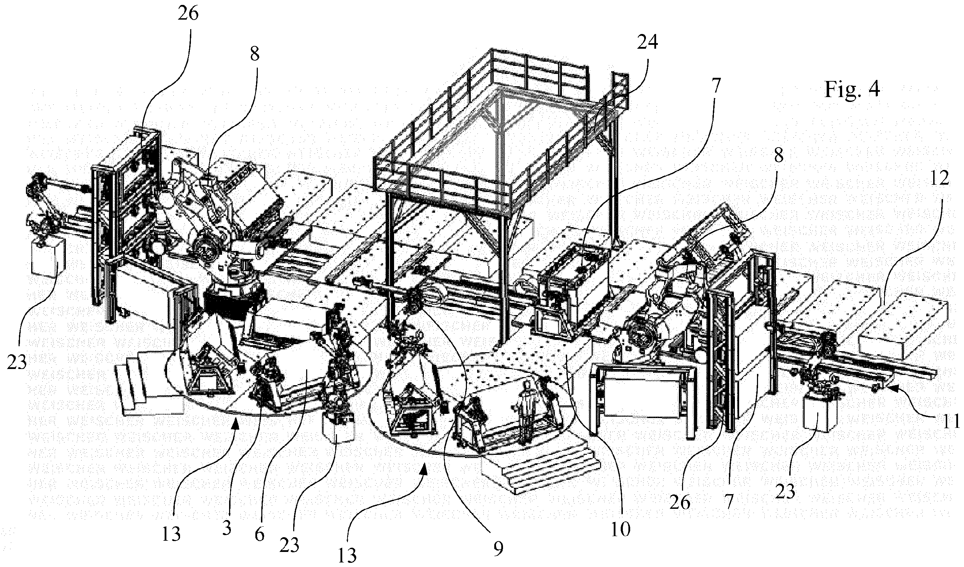

Eine sehr komplexe Fertigungsanlage 1 geht aus der Figur 4 hervor. Hierbei kommen zwei spiegelbildlich nebeneinander angeordnete Rundtische 13 zum Einsatz, die in der zuvor bereits beschriebenen Weise jeweils mit Werkzeugtransporteinrichtungen 10, 11 gekoppelt sind. Die Werkzeugtransporteinrichtungen 10, 11 dienen dem Transport der Fertigungswerkzeuge 7 in das Werkzeugmagazin 12 und aus dem Werkzeugmagazin 12 zu einer der Bearbeitungsstationen 14, 15, 16. In der Figur 4 ist sehr anschaulich erkennbar, dass die Werkzeugträgerunterteile 3 dazu geeignet sind, die darin aufgenommenen Werkzeugunterteile 6 in einer um eine Achse verschwenkten Position aufzunehmen. Bei dem dargestellten Beispiel weisen die Werkzeugunterteile 6 eine Neigung von etwa 45° zur Horizontalen auf, so dass die vorhandenen Bedienroboter 23 optimal agieren können. Zwischen den Drehtischen 13 ist ferner ein Schäumroboter 9 angeordnet, der in vorteilhafter Weise beide Drehtische 13 bedient und damit die Werkzeugunterteile 6 der Drehtische 13 in der Bearbeitungsposition 15 mit dem aufschäumbaren Reaktionsgemisch versorgt. Der jeweils vorhandene Werkzeugroboter 8 hat hierbei ebenfalls zusätzliche Funktionen. So bedient er nicht nur den ihm zugeordneten Drehtisch 13 und transportiert beispielsweise das Fertigungswerkzeug 7 auf die Werkzeugtransporteinrichtung 10 beziehungsweise 11, sondern legt bei Bedarf einige der geöffneten Fertigungswerkzeuge 7 in einem Zwischenlager 26 ab, wo sie beispielsweise durch einen vorhandenen Bedienroboter 23 beflämmt werden können. Ein weiteres, besonderes Merkmal der Ausführungsvariante der Fertigungsanlage 1 in Figur 4 besteht darin, dass oberhalb eines Großteils der Fertigungsanlage 1 eine Brücke 24 vorhanden ist, die beispielsweise zur Aufnahme einer Dosieranlage für Zusatzstoffe dienen kann, die bei der Herstellung des Schaumwerkstoffes benötigt werden. Von dieser Dosieranlage aus kann zum Beispiel der Schäumroboter 9 versorgt werden.

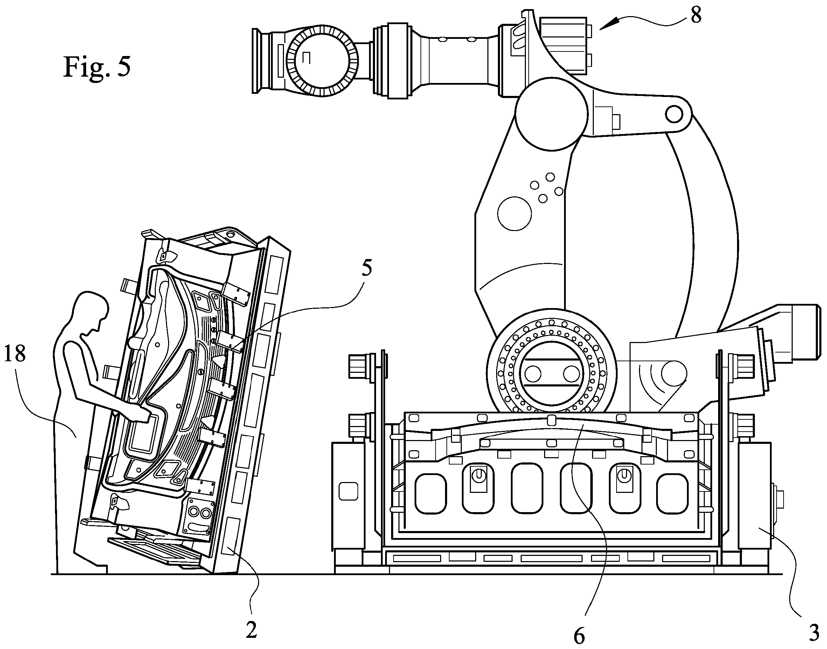

Aus der Figur 5 geht ein vom Werkzeugunterteil 6 getrenntes Werkzeugoberteil 5 in einer zur Bestückung geeigneten Bearbeitungsposition 14 hervor. Daraus wird ersichtlich, dass das in dem Werkzeugträgeroberteil 2 aufgenommene Werkzeugoberteil 5 von dem Werkzeugroboter 8 von dem in dem Werkzeugträgerunterteil 3 aufgenommenen Werkzeugunterteil 6 getrennt und in eine fast senkrechte Position verschwenkt wurde. Die Bedienperson 18 kann somit problemlos eine Bestückung des Werkzeugoberteils 5 vornehmen. Unmittelbar neben dem Werkzeugoberteil 5 ist in dem Werkzeugträgerunterteil 3 das ebenfalls um eine Achse verschwenkte Werkzeugunterteil 6 aufgenommen. Durch dessen Schwenkbarkeit kann die Bedienperson 18 ebenfalls optimal an dem Werkzeugunterteil 6 tätig werden. Für das Öffnen und Schließen des Werkzeugträgers 4 beziehungsweise des Fertigungswerkzeuges 7, sowie dessen Entriegelung und Verriegelung kommt der Werkzeugroboter 8 zum Einsatz.

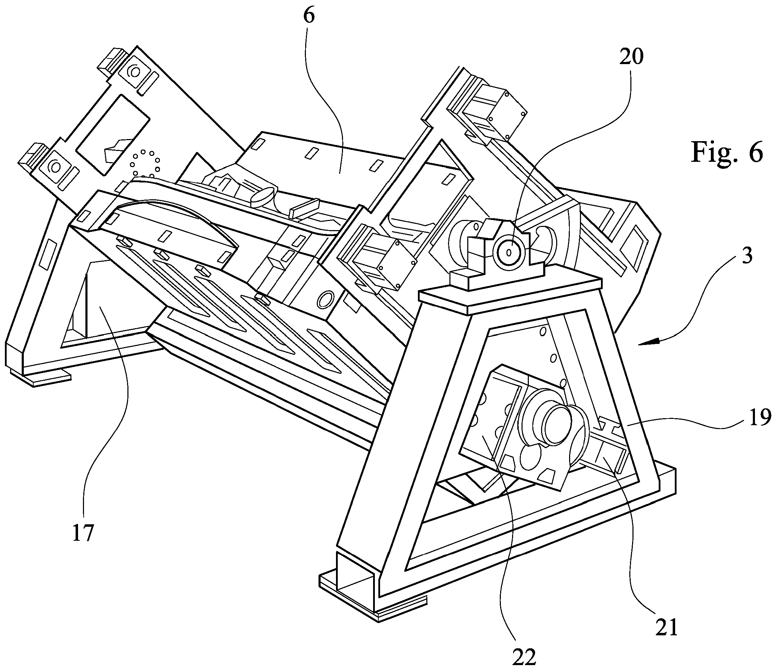

Die Figur 6 zeigt das in dem Werkzeugträgerunterteil 3 aufgenommene Werkzeugunterteil 6 in einer verschwenkten Position. Das Werkzeugträgerunterteil 3 weist darüber hinaus eine Temperierungseinrichtung 17 auf, mit deren Hilfe das Werkzeugunterteil 6 erwärmt werden kann, um dieses auf die Einbringung des zum Aufschäumen geeigneten Reaktionsgemisches vorzubereiten. Zur Umsetzung der Schwenkbarkeit besteht das Werkzeugträgerunterteil 3 aus einem Rahmen 19, an dem ein Antrieb 21 und ein mit dem Antrieb 21 gekoppeltes Getriebe 22 angeordnet sind. Über den Antrieb 21 und das Getriebe 22 wird die erzeugte Bewegungsenergie an den schwenkbaren Teil des Werkzeugträgerunterteils 3 übertragen, das somit um die Drehachse 20 schwenkbar ist.

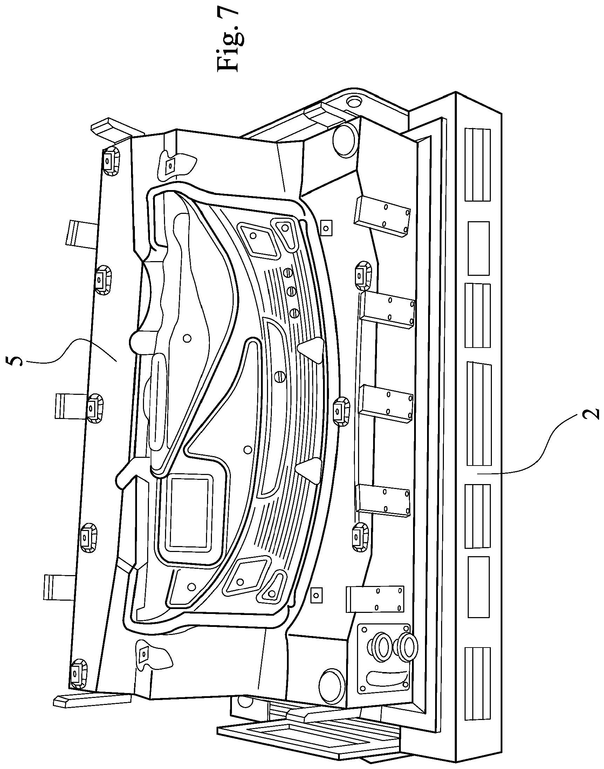

Der Vollständigkeit halber ist in der Figur 7 ein Werkzeugträgeroberteil 2 gezeigt, in dem das Werkzeugoberteil 5 aufgenommen ist. Das Werkzeugoberteil 5 wurde hierbei ebenfalls um eine Achse verschwenkt und nimmt eine fast senkrechte Position ein.

### BEZUGSZEICHENLISTE

- 1: Fertigungsanlage
- 2: Werkzeugträgeroberteil
- 3: Werkzeugträgerunterteil
- 4: Werkzeugträger
- 5: Werkzeugoberteil
- 6: Werkzeugunterteil
- 7: Fertigungswerkzeug
- 8: Werkzeugroboter
- 9: Schäumroboter
- 10: Werkzeugtransporteinrichtung (Rollenband)
- 11: Werkzeugtransporteinrichtung (Shuttle)
- 12: Werkzeugmagazin
- 13: Drehtisch
- 14: Bearbeitungsposition (Bestückung)
- 15: Bearbeitungsposition (Einbringung Schaumwerkstoff)
- 16: Bearbeitungsposition (Reinigung)
- 17: Temperierungseinrichtung
- 18: Bedienperson
- 19: Rahmen
- 20: Drehachse
- 21: Antrieb
- 22: Getriebe
- 23: Bedienroboter
- 24: Brücke
- 25: Produktionsbereich
- 26: Zwischenlager

## Patentansprüche

1. Verfahren zur Herstellung von Verbundwerkstücken mit mindestens einer Schaumstoffschicht in einer Fertigungsanlage (1), die umfasst:
- einen aus einem Werkzeugträgeroberteil (2) und einem Werkzeugträgerunterteil (3) gebildeten Werkzeugträger (4), in dem ein Werkzeugoberteil (5) und ein lösbar mit diesem verbundenes Werkzeugunterteil (6) aufgenommen sind, die zusammen ein Fertigungswerkzeug (7) bilden,
- einen Werkzeugroboter (8),
- einen Schäumroboter (9) zum Eintrag eines zum Aufschäumen geeigneten Reaktionsgemischs,
- eine Computersteuerung,
wobei das Verfahren weiterhin die folgende Verfahrensschritte umfasst:
- der Werkzeugroboter (8) entnimmt das Werkzeugträgeroberteil (2) zusammen mit dem Werkzeugoberteil (5) aus dem Werkzeugträger (4) und setzt das Werkzeugträgeroberteil (2) neben dem im Werkzeugträgerunterteil (3) aufgenommenen Werkzeugunterteil (6) ab,
- wenigstens eine Kavität des Werkzeugoberteils (3) und/oder des Werkzeugunterteils (6) wird mit mindestens einem Bauelement des Verbundwerkstückes ausgestattet,
- der Schäumroboter (9) bringt das Reaktionsgemisch mittels eines Mischkopfes in das geöffnete Werkzeugunterteil (6) ein,
- der Werkzeugroboter (8) nimmt das Werkzeugträgeroberteil (2) mit dem darin enthaltenen Werkzeugoberteil (5) auf und fügt es wieder mit dem Werkzeugträgerunterteil (3) und dem darin aufgenommenen Werkzeugunterteil (6) zusammen, sodass das Fertigungswerkzeug (7) während des Schäumvorganges geschlossen ist.

2. Verfahren zur Herstellung von Verbundwerkstücken mit mindestens einer Schaumstoffschicht in einer Fertigungsanlage (1), die umfasst:
- einen aus einem Werkzeugträgeroberteil (2) und einem Werkzeugträgerunterteil (3) gebildeten Werkzeugträger (4), in dem ein Werkzeugoberteil (5) und ein lösbar mit diesem verbundenes Werkzeugunterteil (6) aufgenommen sind, die zusammen ein Fertigungswerkzeug (7) bilden,
- einen Werkzeugroboter (8),
- einen Schäumroboter (9) zum Eintrag eines zum Aufschäumen geeigneten Reaktionsgemischs,
- eine Computersteuerung,
wobei das Verfahren weiterhin die folgende Verfahrensschritte umfasst:
- der Werkzeugroboter (8) entnimmt das Werkzeugträgeroberteil (2) zusammen mit dem Werkzeugoberteil (5) aus dem Werkzeugträger (4) und setzt das Werkzeugträgeroberteil (2) neben dem im Werkzeugträgerunterteil (3) aufgenommenen Werkzeugunterteil (6) ab,
- wenigstens eine Kavität des Werkzeugoberteils (3) und/oder des Werkzeugunterteils (6) wird mit mindestens einem Bauelement des Verbundwerkstückes ausgestattet,
- der Werkzeugroboter (8) nimmt das Werkzeugträgeroberteil (2) mit dem darin enthaltenen Werkzeugoberteil (5) auf und fügt es wieder mit dem Werkzeugträgerunterteil (3) und dem darin aufgenommenen Werkzeugunterteil (6) zusammen, sodass das Fertigungswerkzeug (7) geschlossen ist,
- der Schäumroboter (9) bringt durch eine Angussöffnung in dem Fertigungswerkzeug (7) mittels eines Mischkopfes das zum Aufschäumen geeignete Reaktionsgemisch in die Kavität des geschlossenen Fertigungswerkzeugs (7) ein.

3. Verfahren nach Anspruch 1 oder 2,
**dadurch gekennzeichnet, dass**
der Werkzeugroboter (8) das geschlossene Fertigungswerkzeug (7) aus dem Werkzeugträger (4) entnimmt und es an eine Werkzeugtransporteinrichtung (10, 11) übergibt, mittels der das Fertigungswerkzeug (7) zu einem Werkzeugmagazin (12) transportiert und dort während des Schäumvorganges abgelegt wird.

4. Verfahren nach Anspruch 1 oder 2,
**dadurch gekennzeichnet, dass**
der Werkzeugroboter (8) den Werkzeugträger (4) mit dem geschlossenen Fertigungswerkzeug (7) aufnimmt und ihn an eine Werkzeugtransporteinrichtung (10, 11), mittels der der Werkzeugträger (4) zu einem Werkzeugmagazin (12) transportiert und dort während des Schäumvorganges abgelegt wird, übergibt.

5. Verfahren nach einem der vorstehend genannten Ansprüche,
**dadurch gekennzeichnet, dass** in mindestens einem Teil des Werkzeugmagazins (12) ein Bedienroboter (23) zur Beflämmung der Kavität des geöffneten Fertigungswerkzeugs (7), also des leeren Werkzeugunterteils (6) und/oder des leeren Werkzeugoberteils (5), verwendet wird.

## Claims

1. Method for producing composite workpieces having at least one foam layer in a production plant (1) which comprises:
- a tool carrier (4) which is formed from a top tool-carrier part (2) and a bottom tool-carrier part (3) and in which a top tool part (5) and a bottom tool part (6), connected releasably to the latter, are accommodated, which together form a production tool (7),
- a tool robot (8),
- a foam robot (9) for introducing a reaction mixture suitable for foaming,
- a computer controller,
wherein the method furthermore comprises the following method steps:
- the tool robot (8) removes the top tool-carrier part (2) together with the top tool part (5) out of the tool carrier (4) and sets the top tool-carrier part (2) down next to the bottom tool part (6) accommodated in the bottom tool-carrier part (3),
- at least one cavity of the top tool part (3) and/or of the bottom tool part (6) is equipped with at least one component of the composite workpiece,
- the foam robot (9) introduces the reaction mixture into the open bottom tool part (6) by means of a mixing head,
- the tool robot (8) picks up the top tool-carrier part (2) with the top tool part (5) contained therein and joins it back to the bottom tool-carrier part (3) and the bottom tool part (6) accommodated therein, such that the production tool (7) is closed during the foaming process.

2. Method for producing composite workpieces having at least one foam layer in a production plant (1) which comprises:
- a tool carrier (4) which is formed from a top tool-carrier part (2) and a bottom tool-carrier part (3) and in which a top tool part (5) and a bottom tool part (6), connected releasably to the latter, are accommodated, which together form a production tool (7),
- a tool robot (8),
- a foam robot (9) for introducing a reaction mixture suitable for foaming,
- a computer controller,
wherein the method furthermore comprises the following method steps:
- the tool robot (8) removes the top tool-carrier part (2) together with the top tool part (5) out of the tool carrier (4) and sets the top tool-carrier part (2) down next to the bottom tool part (6) accommodated in the bottom tool-carrier part (3),
- at least one cavity of the top tool part (3) and/or of the bottom tool part (6) is equipped with at least one component of the composite workpiece,
- the tool robot (8) picks up the top tool-carrier part (2) with the top tool part (5) contained therein and joins it back to the bottom tool-carrier part (3) and the bottom tool part (6) accommodated therein, such that the production tool (7) is closed during the foaming process,
- the foam robot (9) introduces the reaction mixture into the cavity of the closed production tool (7) by means of a mixing head through a sprue opening in the production tool (7).

3. Method according to Claim 1 or 2,
**characterized in that**
the tool robot (8) removes the closed production tool (7) from the tool carrier (4) and transfers it to a tool transport device (10, 11) by means of which the production tool (7) is transported to a tool magazine (12) and is deposited there during the foaming process.

4. Method according to Claim 1 or 2,
**characterized in that**
the tool robot (8) picks up the tool carrier (4) with the closed production tool (7) and transfers it to a tool transport device (10, 11) by means of which the tool carrier (4) is transported to a tool magazine (12) and is deposited there during the foaming process.

5. Method according to one of the preceding claims,
**characterized in that** in at least a part of the tool magazine (12), a service robot (23) is used for the flame treatment of the cavity of the open production tool (7), i.e. of the empty bottom tool part (6) and/or of the empty top tool part (5).

## Revendications

1. Procédé de fabrication de pièces composites pourvues d'au moins une couche de mousse dans une unité de production (1), qui comprend :
- un support d'outil (4) formé par une partie supérieure de support d'outil (2) et une partie inférieure de support d'outil (3), dans laquelle une partie supérieure d'outil (5) et une partie inférieure d'outil (6), reliée à celle-ci de manière détachable, sont reçues, qui forment ensemble un outil de production (7),
- un robot d'outil (8),
- un robot de mousse (9) pour l'apport d'un mélange réactionnel approprié pour le moussage,
- une commande informatique,
le procédé comprenant en outre les étapes de procédé suivantes :
- le robot d'outil (8) extrait la partie supérieure de support d'outil (2) conjointement avec la partie supérieure d'outil (5) hors du support d'outil (4) et dépose la partie supérieure de support d'outil (2) à côté de la partie inférieure d'outil (6) reçue dans la partie inférieure de support d'outil (3),
- au moins une cavité de la partie supérieure d'outil (3) et/ou de la partie inférieure d'outil (6) est équipée d'au moins un composant de la pièce composite,
- le robot de mousse (9) introduit le mélange réactionnel dans la partie inférieure d'outil ouverte (6) au moyen d'une tête de mélange,
- le robot d'outil (8) reçoit la partie supérieure de support d'outil (2) avec la partie supérieure d'outil (5) contenue dans celle-ci et la rassemble avec la partie inférieure de support d'outil (3) et la partie inférieure d'outil (6) reçue dans celle-ci, de telle sorte que l'outil de production (7) est fermé pendant le processus de moussage.

2. Procédé de fabrication de pièces composites pourvues d'au moins une couche de mousse dans une unité de production (1), qui comprend :
- un support d'outil (4) formé d'une partie supérieure de support d'outil (2) et d'une partie inférieure de support d'outil (3), dans laquelle une partie supérieure d'outil (5) et une partie inférieure d'outil (6), reliée à celle-ci de manière détachable, sont reçues, qui forment ensemble un outil de production (7),
- un robot d'outil (8),
- un robot de mousse (9) pour l'apport d'un mélange réactionnel approprié pour le moussage,
- une commande informatique,
le procédé comprenant en outre les étapes de procédé suivantes :
- le robot d'outil (8) extrait la partie supérieure de support d'outil (2) conjointement avec la partie supérieure d'outil (5) hors du support d'outil (4) et dépose la partie supérieure de support d'outil (2) à côté de la partie inférieure d'outil (6) reçue dans la partie inférieure de support d'outil (3),
- au moins une cavité de la partie supérieure d'outil (3) et/ou de la partie inférieure d'outil (6) est équipée d'au moins un composant de la pièce composite,
- le robot d'outil (8) reçoit la partie supérieure de support d'outil (2) avec la partie supérieure d'outil (5) contenue dans celle-ci et la rassemble avec la partie inférieure de support d'outil (3) et la partie inférieure d'outil (6) reçue dans celle-ci, de telle sorte que l'outil de production (7) est fermé,
- le robot de mousse (9) introduit le mélange réactionnel approprié pour le moussage dans la cavité de l'outil de production fermé (7) par un orifice d'injection dans l'outil de production (7) au moyen d'une tête de mélange.

3. Procédé selon la revendication 1 ou 2,
**caractérisé en ce que**
le robot d'outil (8) extrait l'outil de production fermé (7) hors du support d'outil (4) et le transfère à un appareil de transport d'outil (10, 11), au moyen duquel l'outil de production (7) est transporté jusqu'à un magasin d'outil (12) et y est déposé pendant le processus de moussage.

4. Procédé selon la revendication 1 ou 2,
**caractérisé en ce que**
le robot d'outil (8) reçoit le support d'outil (4) avec l'outil de production fermé (7) et le transfère à un appareil de transport d'outil (10, 11), au moyen duquel le support d'outil (4) est transporté jusqu'à un magasin d'outil (12) et y est déposé pendant le processus de moussage.

5. Procédé selon l'une quelconque des revendications précédentes,
**caractérisé en ce que**
un robot de manœuvre (23) est utilisé pour le traitement à la flamme de la cavité de l'outil de production ouvert (7), c'est-à-dire de la partie inférieure d'outil vide (6) et/ou de la partie supérieure d'outil vide (5) dans au moins une partie du magasin d'outil (12).
